# EUROPEAN PATENT SPECIFICATION

(11) **EP 1 900 778 B1**
(45) Date of publication and mention of the grant of the patent: **17.06.2009**
(21) Application number: 07017718.3
(22) Date of filing: 11.09.2007
(51) Int. Cl.: C08L 83/14, C08L 101/10

(54) **Silicone-based curable composition containing polycyclic hydrocarbon group**
Härtbare Zusammensetzung auf Silikonbasis mit polyzyklischer Kohlenwasserstoffgruppe
Composition durcissable à base de silicone contenant un groupe d'hydrocarbure polycyclique

(30) Priority: 12.09.2006 JP 2006247210
(43) Date of publication of application: 19.03.2008
(73) Proprietor: Shin-Etsu Chemical Co., Ltd., Tokyo (JP)
(72) Inventor: Tabei, Eiichi c/o Silicone Denshi Zairyo Gijutsu Kenkyusho, Annaka-shi Gunma-ken (JP)
(74) Representative: Bülle, Jan

(56) References cited:
- EP-A- 0 388 028
- DE-A1- 4 128 932
- US-A- 5 171 816

## Description

### 1. Field of the Invention

The present invention relates to a polycyclic hydrocarbon group-containing silicone-based curable composition that is useful as a sealing material for optical devices such as optical elements, and as a sealing material for other electronic devices such as semiconductor elements.

### 2. Description of the Prior Art

In recent years, the output of blue and white light emitting diodes (LED) has increased, and they are now starting to be used for mobile telephone flashes, backlights for liquid crystal displays, and for general illumination. However, this increase in the LED output has lead to increases in the quantity of ultraviolet light emitted and the quantity of heat generated, meaning the materials used for constructing the devices require better levels of light resistance, heat resistance and crack resistance.

Coating and sealing materials for LEDs require favorable transparency, and although conventional epoxy resins exhibit a high degree of hardness and superior crack resistance, they arc known to undergo discoloration caused by ultraviolet light or heat, which leads to a deterioration in the LED output.

The use of silicone resins has been investigated as one potential solution to the above discoloration problem (see patent reference 1). Soft silicone resins generally exhibit excellent heat resistance, but they suffer from poor workability and are prone to dirt adhesion. Furthermore, although hard silicones provide excellent workability and handling properties, they tend to suffer from inferior crack resistance.

[Patent Reference 1] US 2005/0213926 A1

### SUMMARY OF THE INVENTION

The present invention takes the above problems associated with the conventional technology into consideration, with an object of providing a polycyclic hydrocarbon group-containing silicone-based curable composition, which has a high degree of hardness, excellent heat resistance and crack resistance, and is useful as a sealing material for optical devices such as optical elements, and as a sealing material for other electronic devices such as semiconductor elements.

As a result of intensive investigation aimed at achieving the above object, the inventors of the present invention were able to complete the present invention.

In other words, the present invention provides a polycyclic hydrocarbon group-containing silicone-based curable composition, comprising:
(A), addition reaction product of (a) compound containing two hydrogen atoms bonded to silicon atoms within each molecule, represented by a general formula (1) shown below: 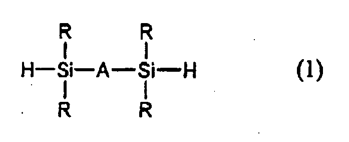 [wherein, A represents a bivalent group selected from the group consisting of groups represented by a general formula (2) shown below: 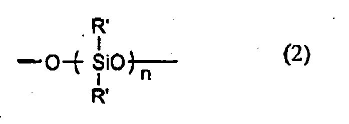 (wherein, each R' represents, independently, an unsubstituted or substituted monovalent hydrocarbon group of 1 to 12 carbon atoms, or an alkoxy group of 1 to 6 carbon atoms, and n represents an integer from 0 to 100) and groups represented by a structural formula (3) shown below: 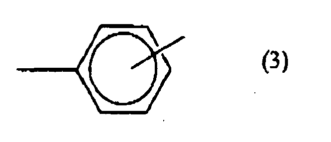 and each R group represents, independently, an unsubstituted or substituted monovalent hydrocarbon group of 1 to 12 carbon atoms, or an alkoxy group of 1 to 6 carbon atoms], and
(b) a polycyclic hydrocarbon containing two addition reactive carbon-carbon double bonds within each molecule, wherein the addition reaction product contains at least two addition reactive carbon-carbon double bonds within each molecule,
(B) a compound containing three or more hydrogen atoms bonded to silicon atoms within each molecule,
(C) a hydrosilylation reaction catalyst, and
(D) a stabilizer containing a hindered amine structure and a phenol structure within each molecule.

The curable composition of the present invention yields a cured product that has a high degree of hardness, excellent resistance to heat discoloration, and excellent crack resistance and transparency. Accordingly, the composition is ideally suited for applications that involve protecting, sealing or bonding light emitting diode elements. Furthermore, the composition is also useful as a lens material, a sealing material for various optical materials, a variety of optical materials such as display materials, an insulating material for electronic materials, and a coating material.

### DETAILED DESCRIPTION OF THE PREFERRED EMBODIMENTS

As follows is a more detailed description of the present invention.

### [Component (A)]

The component (A) of the composition of the present invention is an addition reaction product of:
(a) a compound containing two hydrogen atoms bonded to silicon atoms within each molecule, represented by a general formula (1) shown below: 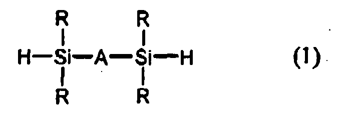 [wherein, A represents a bivalent group selected from the group consisting of groups represented by a general formula (2) shown below: 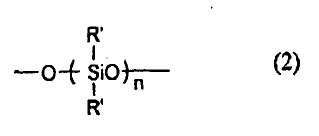 (wherein, each R' represents, independently, an unsubstituted or substituted monovalent hydrocarbon group of 1 to 12 carbon atoms, or an alkoxy group of 1 to 6 carbon atoms, and n represents an integer from 0 to 100) and groups represented by a structural formula (3) shown below: 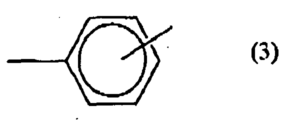 and each R group represents, independently, an unsubstituted or substituted monovalent hydrocarbon group of 1 to 12 carbon atoms, or an alkoxy group of 1 to 6 carbon atoms], and
(b) a polycyclic hydrocarbon containing two addition reactive carbon-carbon double bonds within each molecule, wherein the addition reaction product contains at least two addition reactive carbon-carbon double bonds within each molecule. By introducing a polycyclic hydrocarbon group, a cured product with a high degree of hardness, excellent resistance to heat discoloration, and excellent crack resistance and transparency can be obtained.

### <Component (a)>

In the compound (a) containing two hydrogen atoms bonded to silicon atoms (hereafter also referred to as "SiH groups") within each molecule as represented by the above general formula (1), which represents one of the reaction raw materials for the component (A), in those cases where the group A within the general formula (1) is a bivalent group represented by the above general formula (2), the compound (a) can be represented by a general formula (4) shown below: 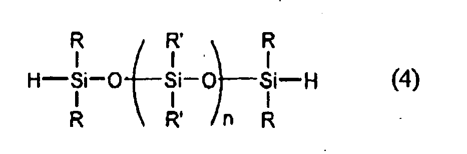 (wherein, each R group and R' group represents, independently, an unsubstituted or substituted monovalent hydrocarbon group containing from 1 to 12 carbon atoms, and preferably from I to 6 carbon atoms, or an alkoxy group containing from 1 to 6 carbon atoms, and preferably from 1 to 4 carbon atoms, and n represents an integer from 0 to 100, and preferably from 0 to 10)

In the above formula, in those cases where R or R' represents an aforementioned monovalent hydrocarbon group, examples of suitable groups include alkyl groups such as a methyl group, ethyl group, propyl group, isopropyl group, butyl group, tert-butyl group, pentyl group, isopentyl group, hexyl group or sec-hexyl group; cycloalkyl groups such as a cyclopentyl group or cyclohexyl group; aryl groups such as a phenyl group or an o-, m- or p-tolyl groups, aralkyl groups such as a benzyl group or 2-phenylethyl group; alkenyl groups such as a vinyl group, allyl group, 1-butenyl group or 1-hexenyl group; alkenylaryl groups such as a p-vinylphenyl group; or groups in which at least one hydrogen atom bonded to a carbon atom within an aforementioned group has been substituted with a substituent such as a halogen atom, a cyano group or an epoxy ring-containing group, including halogenated alkyl groups such as a chloromethyl group, 3-chloropropyl group or 3,3,3-trifluoropropyl group; a 2-cyanoethyl group; or a 3-glycidoxypropyl group.

Furthermore, in those cases where R or R' represents an aforementioned alkoxy group, examples of suitable groups include a methoxy group, ethoxy group, propoxy group, isopropoxy group, butoxy group, sec-butoxy group or tcrt-butoxy group.

Of the above possibilities, compounds in which R and R' are groups other than alkenyl groups or alkenylaryl groups are preferred, and compounds in which all of the R and R' groups are methyl groups arc particularly preferred in terms of the ease with which they can be produced industrially, and their resulting availability.

Specific examples of preferred compounds represented by the above general formula (4) arc presented below, although the compound is not restricted to the structures shown. In the formulas, "Me" represents a methyl group.

HMe₂SiOSiMe₂H

HMe₂SiO(Mc₂SiO)SiMe₂H

HMe₂SiO(Me₂SiO)₄SiMe₂H

HM₂SiO(Me₂SiO)₈SiMe₂H

HMe₂SiO(Mc₂SiO)₁₂SiMe₂H

The compound represented by the above general formula (4) may be either a single compound, or a combination of two or more different compounds.

In the compound (a) containing two SiH groups within each molecule as represented by the above general formula (1), which represents one of the reaction raw materials for the component (A), in those cases where the group A within the general formula (1) is a bivalent group represented by the above structural formula (3), the compound (a) can be represented by a general formula (5) shown below: 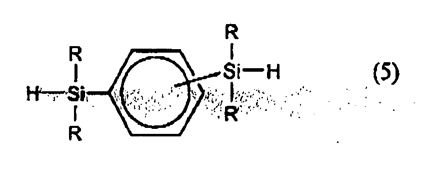 (wherein, R is as defined above in relation to the general formula (4)).

Examples of the R groups within the general formula (5) shown above include the same groups as those described for the R groups within the above general formula (4), and groups other than alkenyl groups or alkenylaryl groups are preferred, and compounds in which all of the R groups are methyl groups are particularly preferred.

Specific examples of compounds represented by the above general formula (5) include silphcnylene compounds such as:
1,4-bis(dimethylsilyl)bcnzene, represented by the structural formula:

   HMe₂Si-p-C₆H₄-SiMe₂H,and
1,3-bis(dimethylsilyl)benzene represented by the structural formula:

   HMe₂Si-m-C₆H₄-SiMe₂H.

The compound represented by the above general formula (5) may be either a single compound, or a combination of two or more different compounds.

In addition, the aforementioned component (a), which represents one of the reaction raw materials for the component (A), may use either a single compound, or a combination of two or more different compounds.

### <Component (b)>

In the polycyclic hydrocarbon (b) containing two addition reactive carbon-carbon double bonds within each molecule, which represents one of the reaction raw materials for the component (A), the term "addition reactive" describes the property of being able to receive the addition of a silicon atom-bonded hydrogen atom (via a a process known as a hydrosilylation reaction).

The component (b) may be any one of: (i) a hydrocarbon in which addition reactive carbon-carbon double bonds are formed between two adjacent carbon atoms from amongst the carbon atoms that form the polycyclic skeleton of the polycyclic hydrocarbon, (ii) a hydrocarbon in which hydrogen atoms bonded to carbon atoms that form the polycyclic skeleton of the polycyclic hydrocarbon are substituted with groups containing addition reactive carbon-carbon double bonds, and (iii) a hydrocarbon in which an addition reactive carbon-carbon double bond is formed between two adjacent carbon atoms from amongst the carbon atoms that form the polycyclic skeleton of the polycyclic hydrocarbon, and a hydrogen atom bonded to a carbon atom that forms part of the polycyclic skeleton of the polycyclic hydrocarbon is substituted with a group containing an addition reactive carbon-carbon double bond,

Examples of this component (b) include 5-vinylbicyclo[2.2.]hept-2-ene, represented by a structural formula (x) shown below: 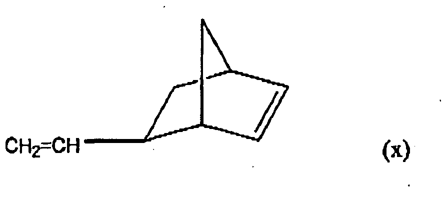 6-vinylbicyclo[2.2.1]hept-2-ene, represented by a structural formula (y) shown below: 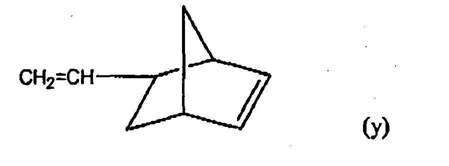 or a combination of these two compounds (hereafter, in those cases where there is no need to differentiate between these three options, the generic term "vinylnorbornene" may be used); as well as dicyclopentadiene, represented by a structural formula (z) shown below

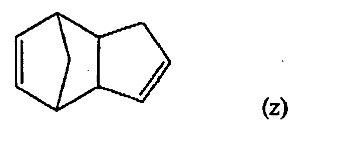

The position of substitution for the vinyl group in the above vinylnorbornenes may adopt either a cis arrangement (the exo form) or a trans arrangement (the endo form), or alternatively, because this variation in the vinyl group arrangement does not cause any significant changes in the reactivity of the component, a combination of both isomers may also be used.

### <Preparation of the Component (A)>

The component (A) of the composition of the present invention can be produced as an addition reaction product containing no SiH groups, by conducting an addition reaction in the presence of a hydrosilylation reaction catalyst between 1 mol of the aforementioned component (a) containing two SiH groups within each molecule, and an excess equivalent to more than 1 mol but not more than 10 mols, and preferably more than 1 mol but not more than 5 mols, of the aforementioned component (b) containing two addition reactive carbon-carbon double bonds within each molecule.

A component (A) obtained in this manner contains not only addition reactive carbon-carbon double bonds derived from the component (b), but may also include addition reactive carbon-carbon double bonds derived from the component (a) (specifically, addition reactive carbon-carbon double bonds derived from the R groups within the general formula (1) and/or the R' groups within the general formula (2)). As a result, the component (A) comprises at least two addition reactive carbon-carbon double bonds within each molecule, and this number of double bonds is preferably within a range from 2 to 6, and is more preferably 2. If the component (A) contains too many of these addition reactive carbon-carbon double bonds, then the cured product obtained by curing the composition of the present invention tends to more prone to cracking.

The hydrosilylation reaction catalyst mentioned above can use any of the conventionally used catalysts. Suitable examples include platinum-based catalysts such as metallic platinum supported on carbon powder, platinum black, platinic chloride, chloroplatinic acid, reaction products of chloroplatinic acid and monovalent alcohols, complexes of chloroplatinic acid and olefins, and platinum bisacetoacetate; as well as other platinum group metal-based catalysts such as palladium-based catalysts and rhodium-based catalysts. Furthermore, there are no particular restrictions on the addition reaction conditions, or on the use of solvent, and normal practices can be followed.

As described above, during the preparation of the component (A), because the component (b) is used in a molar excess relative to the component (a), the product component (A) contains two addition reactive carbon-carbon double bonds derived from the structure of the component (b) within each molecule. In addition, the component (A) may also comprise residues derived from the component (a), and these residues may include structures that are bonded via bivalent polycyclic hydrocarbon residues derived from the structure of the component (b) but containing no addition reactive carbon carbon double bonds.

In other words, examples of the component (A) include compounds represented by a general formula (6) shown below:

Y X-(Y'-X)p-Y (6)

(wherein, X is a bivalent residue of the compound of the component (a), Y is a monovalent residue of the polycyclic hydrocarbon of the component (b), Y' is a bivalent residue of the component (b), and p represents an integer from 0 to 10, and preferably from 0 to 5).

The value of p, which represents the number of repeating units (Y'-X), can be controlled by adjusting the quantity of the molar excess of the component (b) that is reacted with each mol of the component (a).

Specific examples of the group Y in the above general formula (6) include monovalent residues represented by the structural formulas shown below: 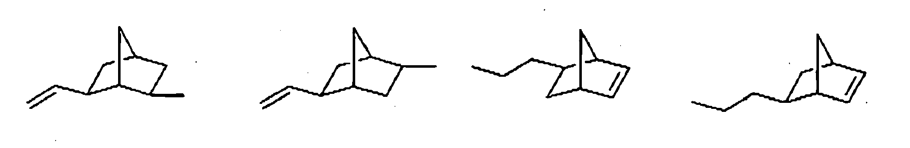 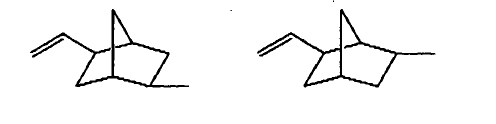 (hereafter, in those cases where there is no need to differentiate between the above 6 residues, the generic term "NB group" may be used, and the abbreviation "NB" may be used to refer to the above 6 structures without differentiation); 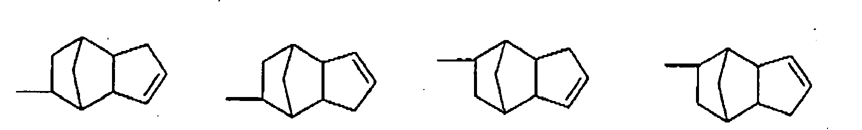 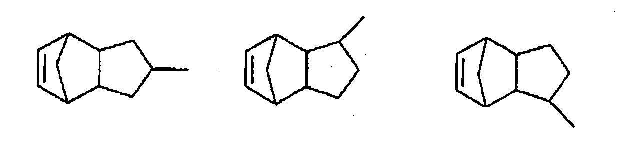 (hereafter, in those cases where there is no need to differentiate between the above 7 residues, these structures may be abbreviated using the term "DCP").

Specific examples of the group Y' in the above general formula (6) include bivalent residues represented by the structural formulas shown below.

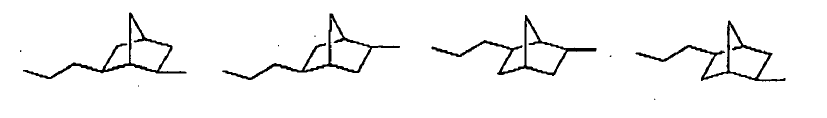

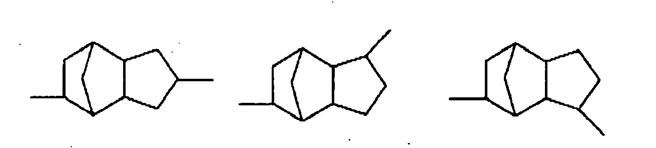

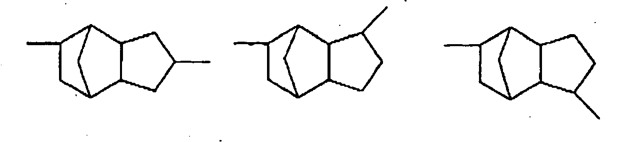

In the asymmetric bivalent residues represented by the above structural formulas, the left-right direction of the residue is not restricted to the orientation shown in the
above formula, and each of thc structural formulas also includes the structure produced by a 180 degree rotation within the plane of the paper, about an axis perpendicular to the plane of the paper.

Specific examples of preferred forms of the component (A) represented by the above general formula (6) arc presented below, although the component (A) is not restricted to the structures shown. (The meanings of "NB" and "DCP" are as defined above.)

NB-Me₂SiOSiMc₂-NB

NB-Me₂SiO(Me₂SiO)SiMe₂-NB

NB-Me₂SiO(Me₂SiO)₄SiMe₂-NB

NB-Mc₂SiO(Me₂SIO)ₛSiMe₂-NB

NB-Me₂SiO(Me₂SiO)₁₂SiMe₂-B

NB-Me₂Si-p-C₆-SiMe₂-NB

NB-Me₂Si-m-C₆H₄-SiMe₂-NB

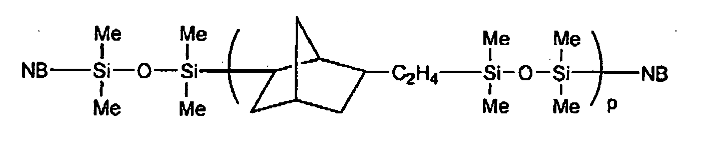

(wherein, p represents an integer from 1 to 10) 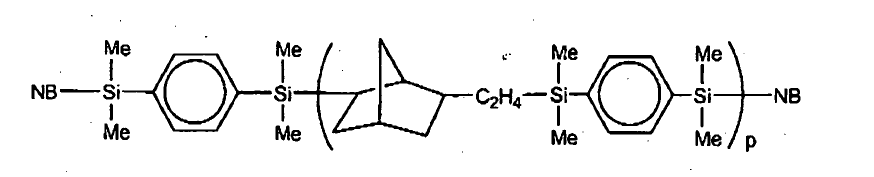 (wherein, p represents an integer from 1 to 10)

DCP-Me₂SiOSiMe₂-DCP

DCP-Me₂SiO(Me₂SiO)SiMe₂-DCP

DCP-Me₂SiO(Me₂SiO)₄SiMe₂-DCP

DCP-Me₂SiO(Me₂SiO)₈SiMe₂-DCP

DCP-Me₂SiO(Me₂SiO)₁₂SiMe₂-DCP

DCP-Me₂Si-p-C₆H₄-SiMe₂-DCP

DCP-Me₂Si-m-C₆H₄-SiMe₂-DCP

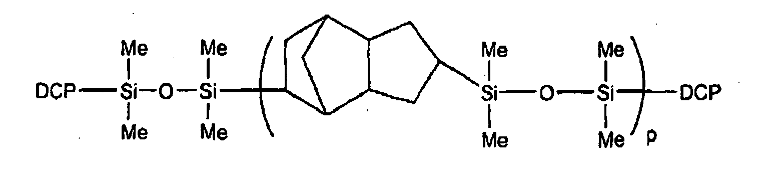

(wherein, p represents an integer from 1 to 10) 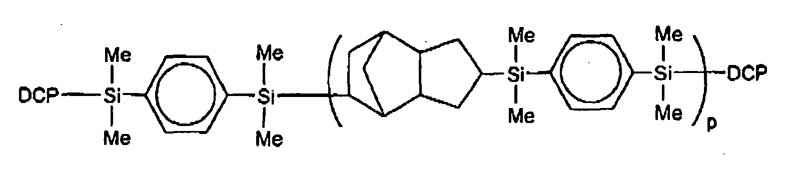 (wherein, p represents an integer from 1 to 10)

Moreover, the component (A) of the present invention may use either a single compound, or a combination of two or more different compounds.

### [Component (B)]

The component (B) of the present invention is a compound containing three or more SiH groups within each molecule. The SiH groups within this component (B) undergo addition, via a hydrosilylation reaction, with the two or more addition reactive carbon-carbon double bonds within each molecule of the component (A), thereby forming a cured product with a three dimensional network structure.

Examples of the component (B) include cyclic siloxane-based compounds represented by a general formula (7) shown below: 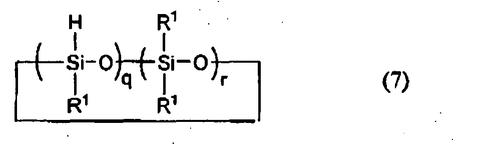 (wherein, each R¹ represents, independently, either a hydrogen atom, or an unsubstituted or substituted monovalent hydrocarbon group other than an alkenyl group that contains from 1 to 12 carbon atoms, and preferably from 1 to 6 carbon atoms, q represents an integer from 3 to 10, and preferably from 3 to 8, r represents an integer from 0 to 7, and preferably from 0 to 2, and the sum of q+r is an integer within a range from 3 to 10, and preferably from 3 to 6).

In those cases where R¹ in the above general formula (7) represents an unsubstituted or substituted monovalent hydrocarbon group other than an alkenyl group, examples of suitable groups include alkyl groups such as a methyl group, ethyl group, propyl group, isopropyl group, butyl group, tert-butyl group, pentyl group, isopentyl group, hexyl group or see-hexyl group; cycloalkyl groups such as a cyclopentyl group or cyclohexyl group; aryl groups such as a phenyl group or an o-, m- or p-tolyl group; aralkyl groups such as a benzyl group or 2-phenylethyl group; or a group in which at least one hydrogen atom bonded to a carbon atom within an aforementioned group has been substituted with a substituent such as a halogen atom, a cyano group or an epoxy ring-containing group, including halogenated alkyl groups such as a chloromethyl group, 3-chloropropyl group, or 3,3,3-trifluoropropyl group; a 2-cyanoethyl group; or a 3-glycidoxypropyl group.

Of the above compounds represented by the general formula (7), compounds in which all the R¹ groups are methyl groups are preferred in terms of the ease with which they can be produced industrially, and their resulting availability.

Specific examples of the component (B) include addition reaction products containing three or more SiH groups within each molecule, obtained by conducting a hydrosilylation reaction between the aforementioned vinylnorbornene and 1,3,5,7-tetramethylcyclotetrasiloxane, such as the compounds represented by a general formula (8) shown below: 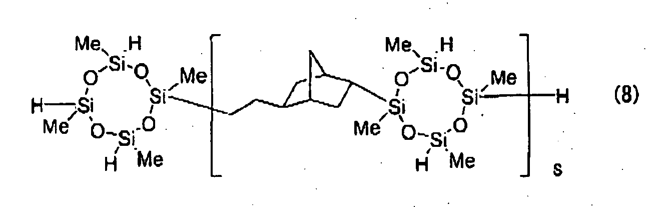 (wherein, s represents an integer from 1 to 100, and preferably from 1 to 10). By introducing a polycyclic hydrocarbon group, a cured product with a high degree of hardness, excellent resistance to heat discoloration, and excellent crack resistance and transparency can be obtained.

Specific examples of preferred forms of the component (B) are presented below although the component (B) is not restricted to the structures shown.

(HMeSiO)₃

(HMeSiO)₄

(HMeSiO)₃(Me₂SiO)

(HMeSiO)₄(MC₂SiO)

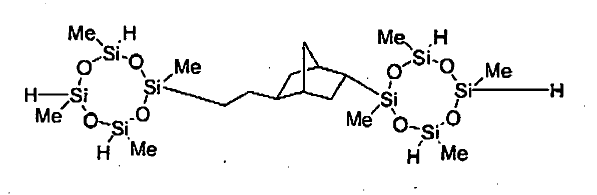

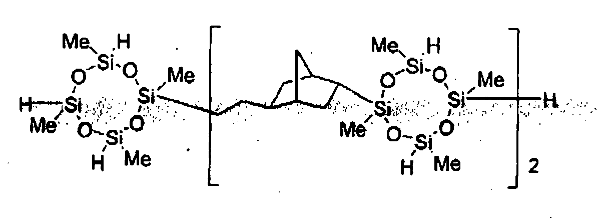

The component (B) of the present invention may use either a single compound, or a combination of two or more different compounds.

The blend quantity of the component (B) is preferably determined in the following manner. As described below, the composition of the present invention may also include an optional component containing a hydrogen atom bonded to a silicon atom other than the component (B), and/or an optional component containing an addition reactive carbon-carbon double bond bonded to a silicon atom other than the component (A). In the composition of the present invention, the quantity of hydrogen atoms bonded to silicon atoms within the entire composition is typically within a range from 0.5 to 2.0 mols, and preferably from 0.8 to 1.5 mols, for each 1 mol of addition reactive carbon-carbon double bonds bonded to silicon atoms within the entire composition. Moreover, the hydrogen atoms bonded to silicon atoms within the component (B) typically account for 20 to 100 mol%, and preferably from 40 to 100 mol%, of all the hydrogen atoms bonded to silicon atoms within the composition. Furthermore, the addition reactive carbon-carbon double bonds within the component (A) typically account for 20 to 100 mol%, and preferably from 40 to 100 mol%, of all the addition reactive carbon-carbon double bonds bonded to silicon atoms within the composition Provided the blend quantity of the component (B) satisfies the above conditions, a cured product can be obtained that exhibits a satisfactory level of hardness for applications such as coating materials.

In those cases where the composition does not include the optional components described above, the blend quantity of the component (B) within the composition of the present invention is adjusted so that for each 1 mol of addition reactive carbon-carbon double bonds within the component (A), the number of mols of SiH groups within the component (B) is typically within a range from 0.5 to 2.0 mols, and is preferably from 0.8 to 1.5 mols.

### [Component (C)]

The hydrosilylation catalyst of the component (C) of the present invention can be the same as the catalyst described above in the section entitled "Preparation of the Component (A)".

There are no particular restrictions on the quantity of the component (C) added to the composition of the present invention, and any effective catalytic quantity is suitable. A typical quantity of the component (C), calculated as the mass of platinum group metal atoms relative to the combined mass of the component (A) and the component (B), is from 1 to 500 ppm, and this quantity is preferably from 2 to 100 ppm. By ensuring a quantity within this range, the time required for the curing reaction is suitably short, and problems such as coloring of the cured product do not arise.

### [Component (D)]

The compound containing a hindered amine structure and a phenol structure that functions as the component (D) of the present invention acts as a stabilizer, and suppresses oxidation of the polycyclic hydrocarbon groups that can cause discoloration. Specific examples of the compound (D) include compounds having a structure represented by a general formula (9) shown below. 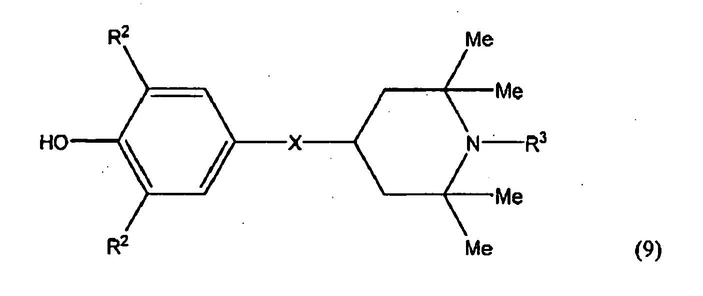 [wherein, each R² represents, independently, a monovalent hydrocarbon group such as a methyl group, ethyl group or t-butyl group, R³ represents a hydrogen atom, methyl group or ethyl group, and X represents a bivalent residue]

Specific examples of the bivalent residue represented by X include the structures shown below. 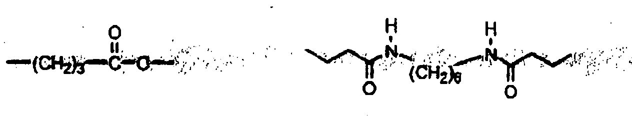 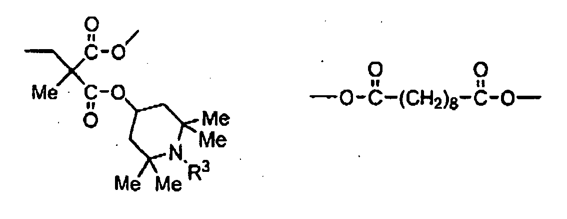 [wherein, R³ is as defined above, and is preferably a methyl group]

A more specific example of the compounds represented by the general formula (9) is the compound represented by the formula (10) shown below. 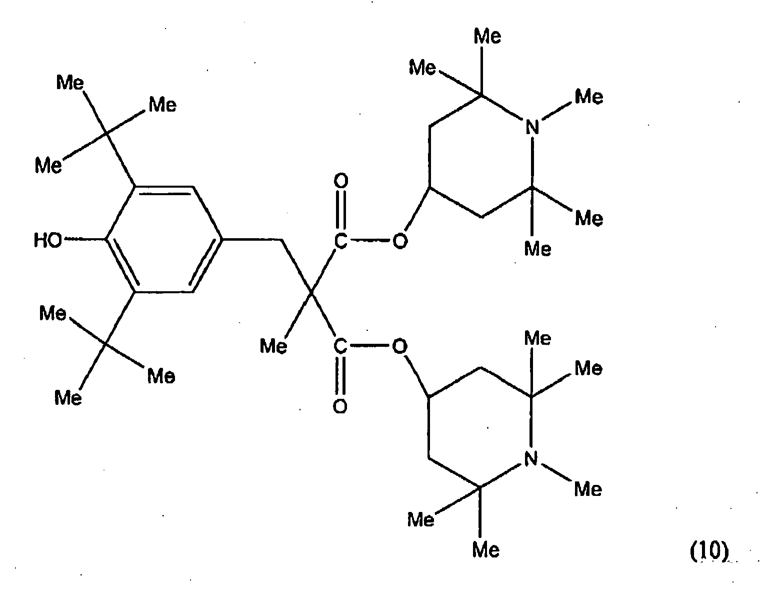 This compound can be obtained commercially under the brand name TINUVIN 144 (manufactured by Ciba Specialty Chemicals Inc.).

There are no particular restrictions on the blend quantity of the component (D), which need only be sufficient to effectively prevent coloration. A typical quantity of the component (D), relative to the combined mass of the component (A) and the component (B), is from 10 to 10,000 ppm, and this quantity is preferably from 100 to 1,000 ppm.

### [Other Components]

In addition to the components (A) through (D) described above, other components may also be added to the composition of the present invention, provided such addition docs not impair the objects and effects of the present invention.

### <Antioxidants>

A cured product of the curable resin composition of the present invention may contain residual unreacted addition reactive carbon-carbon double bonds from the component (A), and these double bonds can cause coloration upon oxidation.

In such cases, any of the conventionally available antioxidants can be added to the composition of the present invention. Examples of suitable antioxidants include 2,6-di-t-butyl-4-methylphenol, 2,5-di-t-amylhydroquinone, 2,5-di-t-butylhydroquinone, 4,4'-butylidene-bis(3-methyl-6-t-butylphenol), 2,2'-methylene-bis(4-methyl-6-t-butylphenol), and 2,2'-methylene-bis(4-ethyl-6-t-butylphenol). These compounds may be used either alone, or in combinations of two or more different compounds.

In those cases where an antioxidant is used, there arc no particular restrictions on the blend quantity, and any quantity that provides an effective antioxidant action is suitable. A typical quantity, relative to the combined mass of the component (A) and the component (B), is from 10 to 10,000 ppm, and this quantity is preferably from 100 to 1,000 ppm. By ensuring a blend quantity within this range, a satisfactory antioxidant action can be achieved, and a cured product with superior optical characteristics, with no coloring, turbidity or oxidation degradation, can be obtained.

### <Viscosity and Hardness Regulating Agents>

In order to regulate the viscosity of the composition of the present invention, or regulate the hardness of the cured product produced from the composition of the present invention, straight-chain diorganopolysiloxanes or network-type organopolysiloxanes containing either an alkenyl group bonded to a silicon atom or a SiH group; and/or unreactive (that is, containing no alkenyl groups bonded to silicon atoms nor SiH groups) straight-chain or cyclic diorganopolysiloxanes or silphenylene-based compounds may be added to the composition.

### <Other Additives>

Furthermore, in order to extend the pot life, addition reaction retarders such as 1ethynylcyclohexanol and 3,5-dimethyl-1-hexyn-3-ol may also be added. In addition, inorganic fillers such as fumed silica may also be added to improve the strength, provided such addition docs not impair the transparency. Moreover, if necessary, dyes, pigments, flame retardants and the like may also be added.

In addition, light stabilizers can also be used to impart resistance to light degradation caused by light energy from sunlight, fluorescent lights or the like. Hindered amine-based stabilizers, which capture the radicals generated upon photooxidation degradation, are ideal as these light stabilizers, and by using such light stabilizers in combination with the antioxidants described above, the oxidation prevention effect can be further enhanced. Specific examples of these light stabilizers include bis(2,2,6,6-tetramethyl-4-piperidyl) sebacate and 4-benzoyl-2,2,6,6-tetramethylpiperidine.

In addition, in those cases where the composition of the present invention is used as a sealing material, a silane coupling agent may be added to improve the adhesion of the composition to substrates, and a plasticizer may also be added to prevent cracking.

There are no particular restrictions on the curing conditions used for the composition of the present invention, which will vary depending on the quantity of the composition, although normally, curing at 60 to 180°C for a period of 5 to 180 minutes is preferred.

### EXAMPLES

As follows is a description of specific details of the present invention, based on a series of examples and comparative examples, although the present invention is in no way restricted to the examples presented below.

### [Synthesis Example 1] Preparation of a Component (A)

A 500 ml four-neck flask fitted with a stirrer, a cooling tube, a dropping funnel and a thermometer was charged with 156 g (1.3 mols) of a vinylnorbornene (brand name: V0062, manufactured by Tokyo Kasei Kogyo Co., Ltd., a substantially equimolar isomeric mixture of 5-vinylbicyclo[2.2.1]hept-2-ene and 6-vinylbicyclo[2.2.1]hept-2-ene), and the flask was then heated to 85°C using an oil bath. 0.05 g of a carbon powder supporting 5% by mass of platinum metal was then added to the flask, and with the mixture undergoing constant stirring, 67 g (0.5 mols) of 1,1,3,3-tetramethyldisiloxane was added dropwise over a period of 60 minutes. Following completion of the dropwise addition, the reaction mixture was heated and stirred at 90°C for 24 hours, and was then cooled to room temperature. Subsequently, the carbon-supported platinum metal was removed by filtration, and the excess vinylnorbornene was removed by evaporation under reduced pressure, yielding 170 g of a colorless, transparent, oily reaction product (viscosity at 25°C: 110 mm²/s).

The results of FT-IR, NMR and GPC analyses of the above reaction product confirmed that the product was a mixture of:
(1) approximately 70 mol% of a compound containing a single -Si-O-Si- linkage: NBMe₂SiOSiMe₂NB,
(2) approximately 25 mol% of compounds containing two -Si-O-Si- linkages: (one example of a representative structural formula is shown below), 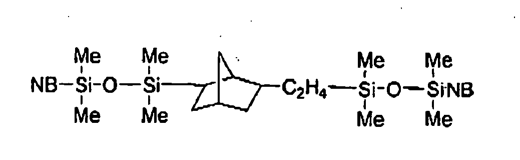 and (3) approximately 5 mol% of compounds containing three -Si-O-Si- linkages: (one example of a representative structural formula is shown below), 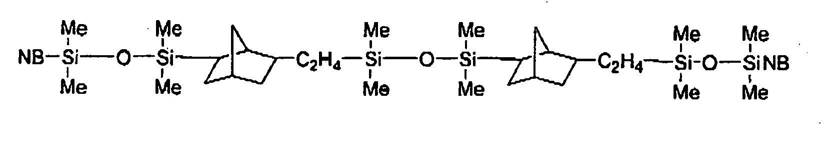 Furthermore, the quantity of addition reactive carbon-carbon double bonds within the entire mixture was 0.46 mols/100 g.

### [Synthesis Example 2] Preparation of a Component (A)

A 500 ml four-neck flask fitted with a stirring device, a cooling tube, a dropping funnel and a thermometer was charged with 60 g (0.5 mols) of a vinylnorbornene (brand name: V0062, manufactured by Tokyo Kasei Kogyo Co., Ltd., a substantially equimolar isomeric mixture of 5-vinylbicyclo[2.2.1]hept-2-ene and 6-vinylbicyclo[2.2.1]hept-2-ene), and the flask was then heated to 85°C using an oil bath, 0.02 g of a carbon powder supporting 5% by weight of platinum metal was then added to the flask, and with the mixture undergoing constant stirring, 38.8 g (0.2 mols) of 1,4-bis(dimethylsilyl)benzene was added dropwise over a period of 25 minutes. Following completion of the dropwise addition, the reaction mixture was heated and stirred at 90°C for 24 hours, and was then cooled to room temperature. Subsequently, the carbon-supported platinum metal was removed by filtration, and the excess vinylnorbornene was removed by evaporation under reduced pressure, yielding 79 g of a colorless, transparent, oily reaction product (viscosity at 25°C: 1,220 mm²/s).

The results of FT-IR, NMR and GPC analyses of the above reaction product confirmed that the product was a mixture of:
(1) approximately 72 mol% of a compound containing a single p-phenylene group: NBMe₂Si-p-C₆H₄-SiMe₂NB
(2) approximately 24 mol% of compounds containing two p-phenylene groups: (one example of a representative structural formula is shown below), 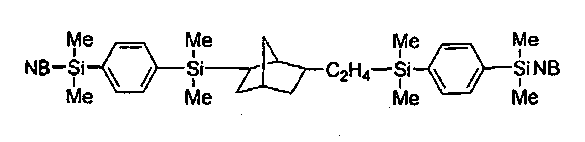 and (3) approximately 4 mol% of compounds containing three p-phenylene groups: (one example of a representative structural formula is shown below), 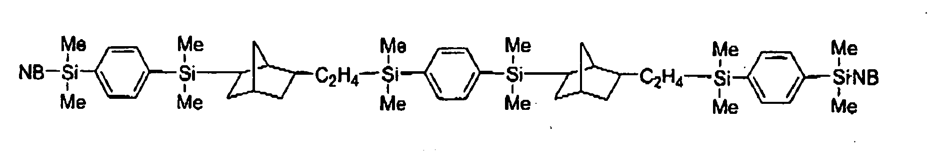 Furthermore, the quantity of addition reactive carbon-carbon double bonds within the entire mixture was 0.40 mols/100 g.

### [Synthesis Example 3] Preparation of a Component (B)

A 500 ml four-neek flask fitted with a stirring device, a cooling tube, a dropping funnel and a thermometer was charged with 80 g of toluene and 115.2 g (0.48 mols) of 1,3,5,7-tetramethylcyclotctrasiloxane, and the flask was then heated to 117°C using an oil bath. 0.05 g of a carbon powder supporting 5% by weight of platinum metal was then added to the flask, and with the mixture undergoing constant stirring, 48 g (0.4 mols) of a vinylnorbornene (brand name: V0062, manufactured by Tokyo Kasei Kogyo Co., Ltd., a substantially equimolar isomeric mixture of 5-vinylbicyclo[2.2.1]hept-2-ene and 6-vinylbicyclo[2.2.1]hept-2-ene) was added dropwise over a period of 16 minutes. Following completion of the dropwise addition, the reaction mixture was heated and stirred at 125°C for 16 hours, and was then cooled to room temperature. Subsequently, the carbon-supported platinum metal was removed by filtration, and the toluene was removed by evaporation under reduced pressure, yielding 152 g of a colorless, transparent, oily reaction product (viscosity at 25°C: 2,500 mm²/s).

The results of FT-IR, NMR and GPC analyses of the above reaction product confirmed that the product was a mixture of
(1) approximately 6 mol% of compounds containing one tetramethylcyclotetrasiloxane ring: (one example of a representative structural formula is shown below), 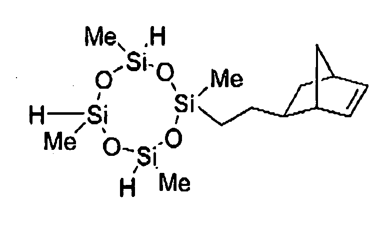
(2) approximately 25 mol% of compounds containing two tetramethylcyclotetrasiloxane rings: (one example of a representative structural formula is shown below), 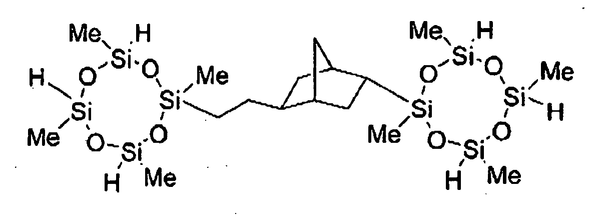
(3) approximately 16 mol% of compounds containing three tetramethylcyclotetrasiloxane rings: (one example of a representative structural formula is shown below), 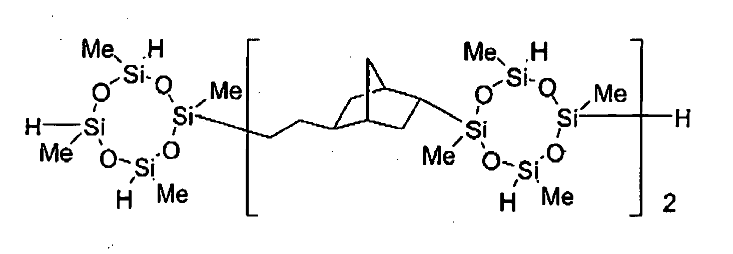
(4) approximately 11 mol% of compounds containing four tetramethylcyclotetrasiloxane rings: (one example of a representative structural formula is shown below), 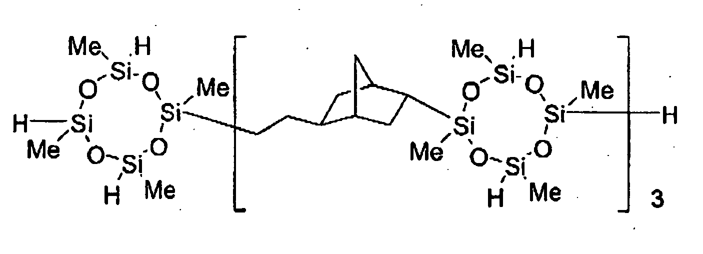 and (5) the remainder comprising compounds containing from 5 to 12 tetramethylcyclotetrasiloxane rings: (one example of a representative structural formula is shown below). 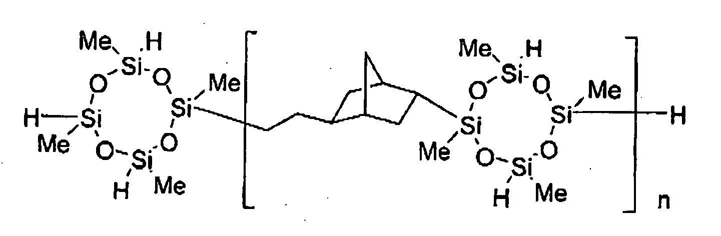 (wherein, n is an integer from 4 to 11)
   The quantity of SiH groups within the entire mixture was 0.63 mols/100 g.

### [Example 1]

(A1) 5 parts by mass of the reaction product obtained in the synthesis example 1, (A2) 60 parts by mass of the reaction product obtained in me synthesis example 2,
(B1) 5 parts by mass of (MeHSiO)₄, (B2) 30 parts by mass of the reaction product obtained in the synthesis example 3 (the molar ratio [total SiH groups within the components (B1) and (B2)] / [total carbon-carbon double bonds within the components (A1) and (A2)] = 1.03, hereafter, this molar ratio of SiH groups / carbon-carbon double bonds is abbreviated as "SiH/C=C (molar ratio)")
(C) a sufficient quantity of a platinum-vinylsiloxane complex to provide 20 ppm of platinum metal atoms relative to the combined mass of the components (A1), (A2), (B1) and (B2),
(D) 0.05 parts by mass of a stabilizer containing a hindered amine structure and a phenol structure (TINUVIN 144, manufactured by Ciba Specialty Chemicals Inc.), and 0.03 parts by mass of 1-ethynylcyclohexanol
   were mixed together uniformly to form a composition. This composition was poured into a mold formed from glass plates to generate a thickness of 2 mm, and was then heated at 150°C for 2 hours, thus yielding a cured product.

### [Example 2]

(A2) 81 parts by mass of the reaction product obtained in the synthesis example 2,
(B1) 19 parts by mass of (MeHSiO)₄
   (SiH/C=C (molar ratio) = 0.98),
(C) a sufficient quantity of a platinum-vinylsiloxane complex to provide 20 ppm of platinum metal atoms relative to the combined mass of the components (A2) and (B 1),
(D) 0.05 parts by mass of a stabilizer containing a hindered amine structure and a phenol structure (TINUVIN 144, manufactured by Ciba Specialty Chemicals Inc.), and 0.03 parts by mass of 1-ethynylcyclohexanol were mixed together uniformly to form a composition. The composition was poured into a mold formed from glass plates to generate a thickness of 2 mm, and was then heated at 150°C for 2 hours, thus yielding a cured product.

### [Example 3]

(A1) 58 parts by mass of the reaction product obtained in the synthesis example 1,
(B2) 42 parts by mass of the reaction product obtained in the synthesis example 3,
   (SiH/C=C (molar ratio) = 0.99),
(C) a sufficient quantity of a platinum-vinylsiloxane, complex to provide 20 ppm of platinum metal atoms relative to the combined mass of the components (A1) and (B2),
(D) 0.05 parts by mass of a stabilizer containing a hindered amine structure and a phenol structure (TINUVIN 144, manufactured by Ciba Specialty Chemicals Inc.), and 0.03 parts by mass of 1-ethynylcyclohexanol were mixed together uniformly to form a composition. The composition was poured into a mold formed from glass plates to generate a thickness of 2 mm, and was then heated at 150°C for 2 hours, thus yielding a cured product.

### [Example 4]

(A2) 61 parts by mass of the reaction product obtained in the synthesis example 2,
(B2) 39 parts by mass of the reaction product obtained in the synthesis example 3,
   (SiH/C=C (molar ratio) = 1.00),
(C) a sufficient quantity of a platinum-vinylsiloxane complex to provide 20 ppm of platinum metal atoms relative to the combined mass of the components (A2) and (B2),
(D) 0.05 parts by mass of a stabilizer containing a hindered amine structure and a phenol structure (TINUVIN 144, manufactured by Ciba Specialty Chemicals Inc.), and 0.03 parts by mass of 1-ethynylcyclohexanol
were mixed together uniformly to form a composition. The composition was poured into a mold formed from glass plates to generate a thickness of 2 mm, and was then heated at 150°C for 2 hours, thus yielding a cured product.

### [Example 5]

(A1) 10 parts by mass of the reaction product obtained in the synthesis example 1, (A2) 55 parts by mass of the reaction product obtained in the synthesis example 2,
(B 1) 5 parts by mass of (MeHSiO)₄, (B2) 30 parts by mass of the reaction product obtained in the synthesis example 3
   (SiH/C=C (molar ratio) = 1.02),
(C) a sufficient quantity of a platinum-vinylsiloxanc complex to provide 20 ppm of platinum metal atoms relative to the combined mass of the components (A1), (A2), (B1) and (B2),
(D) 0.05 parts by mass of a stabilizer containing a hindered amine structure and a phenol structure (TINUVIN 144, manufactured by Ciba Specialty Chemicals Inc.), and 0.03 parts by mass of 1-ethynylcyclohexanol
were mixed together uniformly to form a composition. This composition was poured into a mold formed from glass plates to generate a thickness of 2 mm, and was then heated at 150°C for 2 hours, thus yielding a cured product.

### [Comparative Example 1]

With the exception of not using the component (D) described above in the example 1, a composition and a cured product were prepared in the same manner as the example 1.

### [Comparative Example 2]

With the exception of using 0.05 parts by mass of 2,6-di-t-butyl-4-methylphcnol containing a phenol structure instead of the component (D) described above in the example 1, a composition and a cured product were prepared in the same manner as the example 1.

### [Comparative Example 3]

With the exception of using 0.05 parts by mass of bis(2,2,6,6-tetramcthyl-4-piperidyl) sebacate containing a hindered amine structure instead of the component (D) described above in the example 1, a composition and a cured product were prepared in the same manner as the example 1.

### [Comparative Example 4]

With the exception of using 0.05 parts by mass of 2,6-di-t-butyl-4-methylphenol and 0.05 parts by mass ofbis(2,2,6,6-tctramethyl-4-piperidyl) sebacate instead of the component (D) described above in the example 1, a composition and a cured product were prepared in the same manner as the example 1.

### <Performance EvaluationMethods>

(1) The performance of the cured products obtained in each of the examples and comparative examples described above was evaluated using the following techniques.

### - External Appearance-

The external appearance of each cured product was inspected visually. The results are shown in Table 1.

### - Hardness -

The hardness (Shore D) of each cured product was measured in accordance with ASTM D 2240. The results of the measurements are shown in Table 1.

### - Crack Resistance -

The resin compositions obtained in the examples and comparative examples were each poured into a PPA cup comprising an LED chip that had been wire bonded with gold wire, and subsequently cured by heating at 100°C for 1 hour and then at 150°C for a further 5 hours. Using a thermal shock test device, the resulting structures were each subjected to 100 cycles of a thermal shock test, with each cycle comprising 30 minutes at -40°C and then 30 minutes at 120°C, and the structures were then inspected for cracking. The results are shown in Table 1, using the grades shown below.
A: No change
B: Micro-cracks around the wiring portion
C: Cracking around the wiring portion and the chip portion
D: Cracks exist throughout the entire sealing resin, or detachment of the sealing resin

### - Heat Resistance -

Samples of the 2 mm thick cured products prepared in each of the examples and comparative examples were left to stand, either for 240 hours at 150°C or for 24 hours at 180°C, and the light transmittance at 400 nm was then measured.

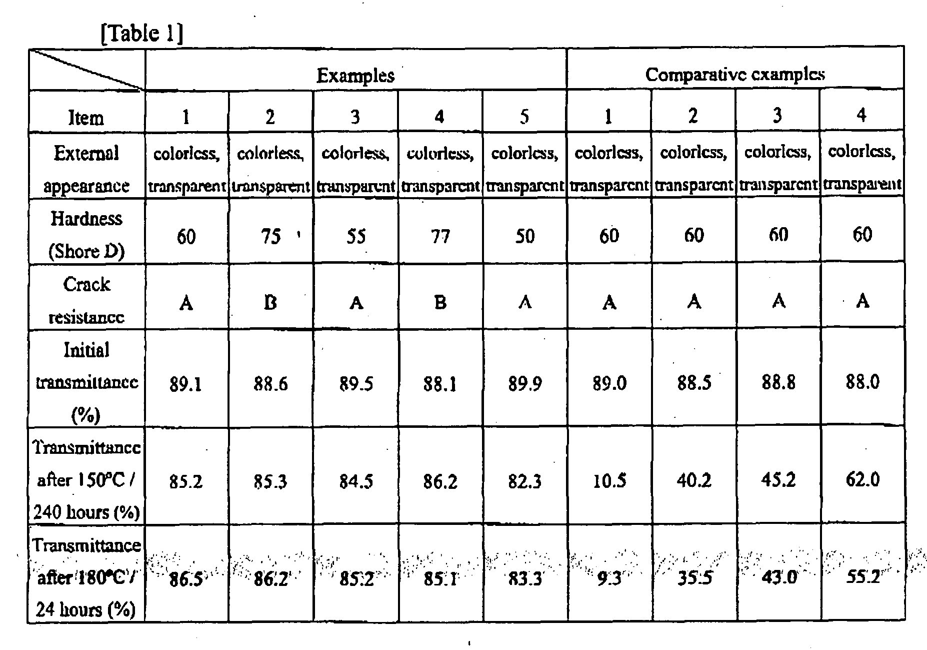

### [Evaluations]

When compared with the comparative examples, the cured products of the examples exhibit significantly superior resistance to heat discoloration.

## Claims

1. A polycyclic hydrocarbon group-containing silicone-based curable composition, comprising:
(A) an addition reaction product of (a) a compound containing two hydrogen atoms bonded to silicon atoms within each molecule, represented by a general formula (1) shown below: 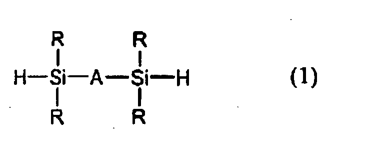 wherein, A represents a bivalent group selected from groups represented by a general formula (2) shown below: 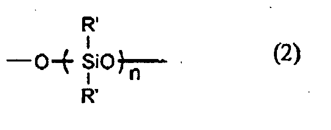 (wherein, each R' represents, independently, an unsubstituted or substituted monovalent hydrocarbon group of 1 to 12 carbon atoms, or an alkoxy group of 1 to 6 carbon atoms, and n represents an integer from 0 to 100) and groups represented by a structural formula (3) shown below: 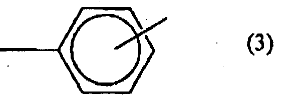 and each R group represents, independently, an unsubstituted or substituted monovalent hydrocarbon group of 1 to 12 carbon atoms, or an alkoxy group of 1 to 6 carbon atoms, and
(b) a polycyclic hydrocarbon containing two addition reactive carbon-carbon double bonds within each molecule, wherein the addition reaction product contains at least two addition reactive carbon-carbon double bonds within each molecule,
(B) a compound containing three or more hydrogen atoms bonded to silicon atoms within each molecule,
(C) a hydrosilylation reaction catalyst, and
(D) a compound containing a hindered amine structure and a phenol structure within each molecule.

2. The curable composition according to claim 1, wherein the polycyclic hydrocarbon of the component (b) is 5-vinylbicyclo[2.2.1 1]hept-2-ene, 6-vinylbicyclo[2.2.1]hept-2-enc, or a combination thereof.

3. The curable composition according to either claim 1 or 2, wherein the component (A) is a compound represented by a general formula (6) shown below:
Y-X-(Y'-X)p-Y (6)
(wherein, X is a bivalent residue of the compound of the component (a), Y is a monovalent residue of the polycyclic hydrocarbon of the component (b), Y' is a bivalent residue of the component (b), and p represents an integer from 0 to 10).

4. The curable composition according to any one of claims 1, 2 or 3, wherein the component (B) is a cyclic siloxane-based compound represented by a general formula (7) shown below: 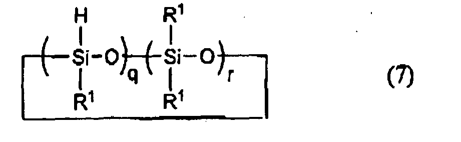 (wherein, each R¹ represents, independently, a hydrogen atom, or an unsubstituted or substituted monovalent hydrocarbon group other than an alkenyl group that contains from 1 to 12 carbon atoms, q represents an integer from 3 to 10, r represents an integer from 0 to 7, and a sum of q+r is an integer within a range from 3 to 10).

5. The curable composition according to any one of claims 1, 2 or 3, wherein the component (B) is a reaction product of 5-vinylbicyclo[2.2.1]hept-2-ene, 6-vinylbicyclo[2.2.1]hept-2-ene or a combination thereof, with 1,3,5,7-tetramethylcyclotetrasiloxane.

6. The curable composition according to any one of claims 1 through 5, wherein a quantity of the component (D) relative to a combined mass of the component (A) and the component (B) is within a range from 10 ppm to 10,000 ppm.

7. The curable composition according to any one of claims 1 through 6, wherein the component (D) is a compound with a structure represented by a general formula (9) shown below. 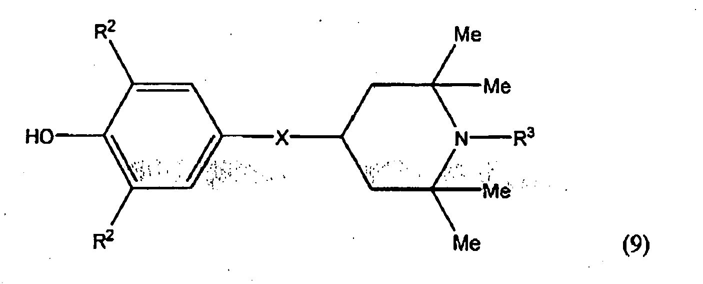 [wherein, each R² represents, independently, a monovalent hydrocarbon group, R³ represents a hydrogen atom, methyl group or ethyl group, and X represents a bivalent residue].

8. The curable composition according to any one of claims 1 through 7, wherein a quantity of hydrogen atoms bonded to silicon atoms within the composition is within a range from 0.5 to 2.0 mols for each 1 mol of addition reactive carbon-carbon double bonds bonded to silicon atoms within the composition.

9. The curable composition according to any one of claims 1 through 8, wherein a ratio of a number of hydrogen atoms bonded to silicon atoms within the component (B) relative to a total number of hydrogen atoms bonded to silicon atoms within the composition is within a range from 20 to 100 mol%, and a ratio of a number of addition reactive carbon-carbon double bonds within the component (A) relative to a total number of addition reactive carbon-carbon double bonds within the composition is within a range from 20 to 100 mol%.

## Patentansprüche

1. Härtbare Zusammensetzung auf Basis von Silikon mit polycyclischen Kohlenwasserstoffgruppen, umfassend:
(A) ein Additionsreaktionsprodukt von (a) einer Verbindung mit zwei an Siliciumatome gebundenen Wasserstoffatomen in jedem Molekül, die durch die nachstehend gezeigte allgemeine Formel (I) wiedergegeben wird: 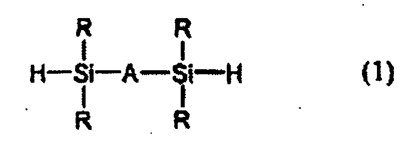 worin A für eine zweiwertige Gruppe steht, die unter Gruppen, die durch die nachstehend gezeigte allgemeine Formel (2) wiedergegeben werden: 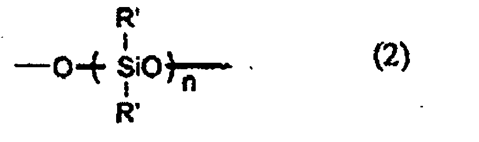 (worin jedes R' unabhängig für eine unsubstituierte oder substituierte einwertige Kohlenwasserstoffgruppe mit 1 bis 12 Kohlenstoffatomen oder eine Alkoxygruppe mit 1 bis 6 Kohlenstoffatomen steht und n für eine ganze Zahl von 0 bis 100 steht), und Gruppen, die durch die nachstehend gezeigte Strukturformel (3) wiedergegeben werden: 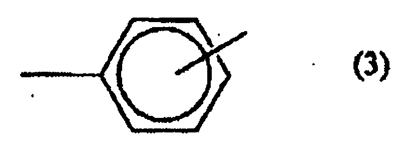 worin jede Gruppe R unabhängig für eine unsubstituierte oder substituierte einwertige Kohlenwasserstoffgruppe mit 1 bis 12 Kohlenstoffatomen oder eine Alkoxygruppe mit 1 bis 6 Kohlenstoffatomen steht,
ausgewählt ist, und
(b) einem polycyclischen Kohlenwasserstoff mit zwei additionsreaktiven Kohlenstoff-Kohlenstoff-Doppelbindungen in jedem Molekül, wobei das Additionsreaktionsprodukt mindestens zwei additionsreaktive Kohlenstoff-Kohlenstoff-Doppelbindungen in jedem Molekül enthält,
(B) eine Verbindung mit drei oder mehr an Siliciumatome gebundenen Wasserstoffatomen in jedem Molekül,
(C) einen Hydrosilylierungsreaktionskatalysator und
(D) eine Verbindung mit einer gehinderten Aminstruktur und einer Phenolstruktur in jedem Molekül.

2. Härtbare Zusammensetzung nach Anspruch 1, worin es sich bei dem polycyclischen Kohlenwasserstoff der Komponente (b) um 5-Vinylbicyclo[2.2.1]hept-2-en, 6-Vinylbicyclo[2.2.1]hept-2-en oder eine Kombination davon handelt.

3. Härtbare Zusammensetzung nach Anspruch 1 oder 2, worin es sich bei der Komponente (A) um eine Verbindung handelt, die durch die nachstehend gezeigte allgemeine Formel (6) wiedergegeben wird:
Y-X-(Y'-X)p-Y (6)
(worin X ein zweiwertiger Rest der Verbindung der Komponente (a) ist, Y ein einwertiger Rest des polycyclischen Kohlenwasserstoffs der Komponente (b) ist, Y' ein zweiwertiger Rest der Komponente (B) ist und p für eine' ganze Zahl von 0 bis 10 steht).

4. Härtbare Zusammensetzung nach einem der Ansprüche 1, 2 oder 3, worin es sich bei der Komponente (B) um eine auf cyclischem Siloxan basierende Verbindung handelt, die durch die nachstehend gezeigte allgemeine Formel (7) wiedergegeben wird: 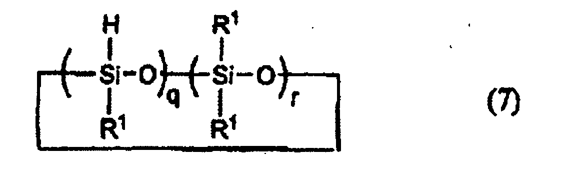 (worin jedes R¹ unabhängig für ein Wasserstoffatom oder eine von einer Alkenylgruppe verschiedene unsubstituierte oder substituierte einwertige Kohlenwasserstoffgruppe, mit 1 bis 12 Kohlenstoffatomen steht, q für eine ganze Zahl von 3 bis 10 steht, r für eine ganze Zahl von 0 bis 7 steht und die Summe q+r eine ganze Zahl im Bereich von 3 bis 10 ist).

5. Härtbare Zusammensetzung nach einem der Ansprüche 1, 2 oder 3, worin es sich bei der Komponente (B) um ein Reaktionsprodukt von 5-Vinylbicyclo[2.2.1]-hept-2-en, 6-Vinylbicyclo[2.2.1]hept-2-en oder einer Kombination davon mit 1,3,5,7-Tetramethylcyclotetrasiloxan handelt.

6. Härtbare Zusammensetzung nach einem der Ansprüche 1 bis 5, worin die Menge der Komponente (D), bezogen auf die kombinierte Masse von Komponente (A) und Komponente (B), im Bereich von 10 ppm bis 10.000 pppm liegt.

7. Härtbare Zusammensetzung nach einem der Ansprüche 1 bis 6, worin es sich bei der Komponente (D) um eine Verbindung mit einer durch die nachstehend gezeogte allgemeine Formel (9) wiedergebenen Struktur handelt 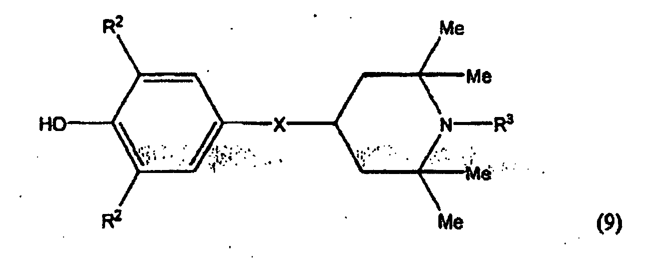 [worin jedes R² unabhängig für eine einwertige Kohlenwasserstoffgruppe steht, R³ für ein Wasserstoffatom, eine Methylgruppe oder eine Ethylgruppe steht und X für einen zweiwertigen Rest steht].

8. Härtbare Zusammensetzung nach einem der Ansprüche 1 bis 7, worin die Menge der an Siliciumatome gebundenen Wasserstoffatome in der Zusammensetzung im Bereich von 0,5 bis 2,0 mol pro 1 mol an Siliciumatome gebundene additionsreaktive Kohlenstoff-Kohlenstoff-Doppelbindungen in der Zusammensetzung liegt.

9. Härtbare Zusammensetzung nach einem der Ansprüche 1 bis 8, worin das Verhältnis der Zahl der an Siliciumatome gebundenen Wasserstoffatome in der Komponente (B) in Relation zur Gesamtzahl der an Siliciumatome gebundenen Wasserstoffatome in der Zusammensetzung im Bereich von 20 bis 100 Mol-% liegt und das Verhältnis der Zahl der additionsreaktiven Kohlenstoff-Kohlenstoff-Doppelbindungen in der Komponente (A) in Relation zur Gesamtzahl der additionsreaktiven Kohlenstoff-Kohlenstoff-Doppelbindungen in der Zusammensetzung im Bereich von 20 bis 100 Mol-% liegt.

## Revendications

1. Composition durcissable à base de silicone renfermant un hydrocarbure polycyclique, comprenant :
(A) un produit de réaction d'addition de (a) un composé renfermant deux atomes d'hydrogène liés à des atomes de silicium dans chaque molécule, représenté par une formule générale (1) illustrée ci-dessous : 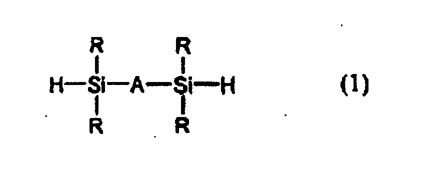
dans laquelle A représente un groupe bivalent choisi parmi les groupes représentés par une formule générale (2) illustrée ci-dessous : 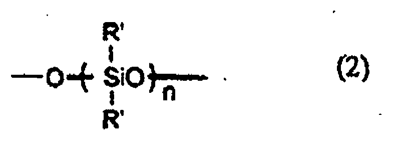 (dans laquelle chaque R' représente indépendamment un groupe hydrocarboné monovalent, non substitué ou substitué, de 1 à 12 atomes de carbone, ou un groupe alcoxy de 1 à 6 atomes de carbone, et n représente un entier de 0 à 100) et des groupes
représentés par une formule structurale (3) illustrée ci-dessous : 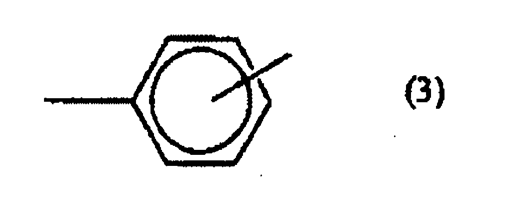 et chaque groupe R représente indépendamment un groupe hydrocarboné monovalent, non substitué ou substitué, de 1 à 12 atomes de carbone, ou un groupe alcoxy de 1 à 6 atomes de carbone, et
(b) un hydrocarbure polycyclique renfermant deux doubles liaisons carbone-carbone réactives par addition dans chaque molécule où le produit de réaction d'addition renferme au moins deux doubles liaisons carbone-carbone réactives par addition dans chaque molécule,
(B) un composé renfermant trois atomes hydrogène ou plus liés à des atomes de silicium dans chaque molécule,
(C) un catalyseur de réaction d'hydrosilylation, et
(D) un composé renfermant une structure amine encombrée et une structure phénol dans chaque molécule.

2. Composition durcissable selon la revendication 1, dans laquelle l'hydrocarbure polycyclique du composant (b) est le 5-vinylbicyclo[2.2.1]hept-2-ène, le 6-vinylbicyclo[2.2.1]hept-2-ène, ou une combinaison de ceux-ci.

3. Composition durcissable selon l'une ou l'autre des revendications 1 ou 2, dans laquelle le composant
(A) est un composé représenté par une formule générale (6) illustrée ci-dessous :
Y-X-(Y'-X)p-Y (6)
(dans laquelle X est un résidu bivalent du composé du composant (a), Y est résidu monovalent de l'hydrocarbure polycyclique du composant (b), Y' est un résidu bivalent du composant (b), et p représente un entier de 0 à 10).

4. Composition durcissable selon l'une quelconque des revendications 1, 2 ou 3, dans laquelle le composant (B) est un composé à base de siloxane cyclique représenté par une formule générale (7) illustrée ci-dessous : 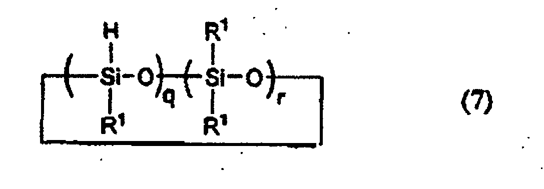 (dans laquelle chaque R¹ représente indépendamment un atome d'hydrogène, ou un groupe hydrocarboné monovalent, non substitué ou substitué, autre qu'un groupe alcényle, qui renferme de 1 à 12 atomes de carbone, q représente un entier de 3 à 10, r représente un entier de 0 à 7, et une somme de q+r est un entier dans une plage de 3 à 10).

5. Composition durcissable selon l'une quelconque des revendications 1, 2 ou 3, dans laquelle le composant (B) est un produit de réaction du 5-vinylbicyclo[2.2.1]hept-2-ène, du 6-vinylbicyclo[2.2.1]hept-2-ène ou d'une combinaison de ceux-ci, avec le 1,3,5,7-tétraméthylcyclotétrasiloxane.

6. Composition durcissable selon l'une quelconque des revendications 1 à 5, dans laquelle une quantité du composant (D), par rapport à une masse combinée du composant (A) et du composant (B), est dans une plage de 10 ppm à 10 000 ppm.

7. Composition durcissable selon l'une quelconque des revendications 1 à 6, dans laquelle le composant (D) est un composé présentant une structure représentée par une formule générale (9) illustrée ci-dessous : 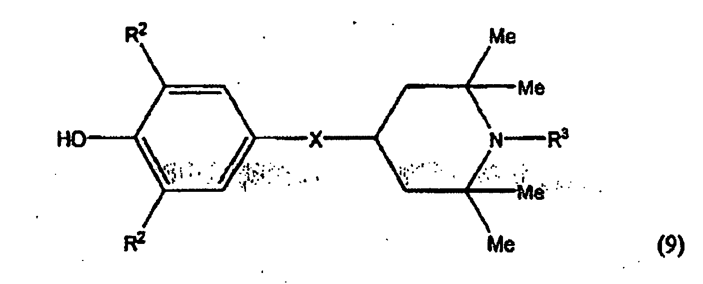 [dans laquelle chaque R² représente indépendamment un groupe hydrocarboné monovalent, R³ représente un atome d'hydrogène, un groupe méthyle ou un groupe éthyle, et X représente un résidu bivalent].

8. Composition durcissable selon l'une quelconque des revendications 1 à 7, dans laquelle une quantité d'atomes d'hydrogène liés à des atomes de silicium dans la composition est dans une plage de 0,5 à 2,0 mol pour chaque 1 mol de doubles liaisons carbone-carbone réactives par addition, liées à des atomes de silicium dans la composition.

9. Composition durcissable selon l'une quelconque des revendications 1 à 8, dans laquelle une proportion d'un nombre d'atomes d'hydrogène liés à des atomes de silicium dans le composant (B) par rapport à un nombre total d'atomes d'hydrogène liés à des atomes de silicium dans la composition est dans une plage de 20 à 100 % en moles, et une proportion d'un nombre de doubles liaisons carbone-carbone réactives par addition dans le composant (A) par rapport à un nombre total de doubles liaisons carbone-carbone réactives par addition dans la composition est dans une plage de 20 à 100 % en moles.
